# EUROPEAN PATENT APPLICATION

(11) **EP 3 162 320 A2**
(43) Date of publication of application: **03.05.2017**
(21) Application number: 16192396.6
(22) Date of filing: 05.10.2016
(51) Int. Cl.: A61C 5/00, A61C 7/20, A61C 7/16

(54) **ORTHODONTIC STRUT**

(30) Priority: 06.10.2015 LU 92842
(71) Applicant: Abels, Norbert, 66424 Homburg/Saar (DE); Backes, Claus, 66113 Saarbrücken (DE)
(72) Inventor: Abels, Norbert, 66424 Homburg/Saar (DE); Backes, Claus, 66113 Saarbrücken (DE)
(74) Representative: Marks & Clerk (Luxembourg) LLP

(57) **Abstract**

A strut for use with an orthodontic retainer device, the strut comprising an adhesion surface for adhering the strut directly to a tooth, wherein the strut is shaped to form an arc defining a arcuate plane, and wherein the strut is shaped so that the adhesion surface is inclined relative to the arcuate plane, and wherein the strut has a length of at least 50 mm. A corresponding method of manufacture is also provided.

## Description

### TECHNICAL FIELD

Embodiments of the invention relate to a strut for use with orthodontic devices and a strut for adhesion to a surface of a tooth, in particular. Further embodiments extend to a corresponding method.

### BACKGROUND

WO 2004/028394 discloses orthodontic retainers in the form of a titanium ribbon having an adhesion surface for adhering the retainer to teeth, the adhesion surface having scratches thereon to improve the bonding of the adhesive.

Such retainers then have to be shaped to fit a patient's mouth. This is done by the orthodontist at the time of fitting the retainer. However, this is a time-consuming process as the retainer has to be bent to fit the dental arch and a torque applied to fit the inclination of the incisors relative to the dental arch.

It is also known to provide arch wires with a pre-applied torque. However, arch wires address a significantly different problem during treatment than retainers.

It is therefore desirable to provide a strut which may be used in a retainer which can be quickly adapted to the geometry of a particular patient's mouth.

Some patients may be allergic to the Nickel or Chromium present in the steel. This is particularly true of Nickel. The adhesion of the rope directly to the enamel of the patient's teeth often fails over time. The steel ropes may break or fracture. In other examples, the ropes deform, thereby reducing the effectiveness of the retainer.

It is therefore desirable to improve the structural strength of the adhesion between the strut used in the orthodontic appliance and the teeth; to provide a stronger strut; and to reduce the incidence of bio-incompatibility such as allergies.

It is further desirable to improve the manner in which orthodontic appliances are pre-stressed prior to insertion to assist in their application.

### SUMMARY

An embodiment of the invention extends to a method of manufacturing an endless strut for use with an orthodontic appliance, the method comprising the steps of:
providing an elongate strut comprising an adhesion surface for adhering the strut directly to a tooth;
shaping the strut to form an arc defining a arcuate plane; and
shaping the strut so that the adhesion surface is inclined relative to the arcuate plane.

The strut may have two parallel sides. The strut may have a length of at least 50 mm.

Although embodiments relate to a method of forming an endless strut, it is to be realised that the embodiments are suitable for all lengths of strut and that the strut thereby produced will, of course, have a defined length.

The strut may have a length of at least 300 mm. In a further embodiment, the strut has a length of at least 400 mm. The length of the strut may be multiples of an average incisor-two-incisor measurement. The length may be 100 mm or more.

The angle of inclination of the adhesion surface relative to the arcuate plane may be between 110° and 160°. In further embodiments, the angle of inclination may be between 120° and 140°.

A diameter of the arc may be between 20 mm and 60 mm.

The strut, or a portion of the strut, may be used as an orthodontic retainer. The strut may be formed as a helix.

The method may further comprise the step of forming formations on said adhesion surface.

The formations may be formed by one or more of: knurling, laser cutting, sandblasting, stamping and rolling.

The formations may be formed together with the steps of shaping the strut to form said arc and incline said adhesion surface. Alternatively, the formation are formed after, or before, or both after and before the steps of shaping the strut to form said arc and incline said adhesion surface.

The formations may be formed by one or more of: knurling, laser cutting, sandblasting, stamping and rolling.

The step of forming said formations may comprise deforming said strut to form patterns of deformations.

The patterns may comprise waffle-weave patterns or honeycomb structures.

The formations may be formed by one or more of: knurling, laser cutting, sandblasting, stamping and rolling.

The strut may be bent and/or formed with a torsion. The strut may be shaped to conform to a shape described by a lingual side of the teeth of a patient's upper or lower jaw.

The strut may be made of a stainless steel alloy.

The strut may be made of Titanium. The Titanium may be commercially pure Titanium.

The strut may be made of one or more elements from the group of Ni, Ti, memory alloys, Zr, Ta, Mo, Hf, and Cr.

The strut may be made of an alloy comprising an element from the group of Ti, Zr, Ta, Mo, Hf, and Cr in the amount greater than 10% by weight.

A further embodiment of the invention extends to a strut for use with an orthodontic retainer device, the strut comprising an adhesion surface for adhering the strut directly to a tooth, wherein the strut is shaped to form an arc defining an arcuate plane, and wherein the strut is shaped so that the adhesion surface is inclined relative to the arcuate plane, and wherein the strut has a length of at least 50 mm.

The strut may be shaped with said arc and said incline along an entire length of the strut.

The adhesion surface may have formations located thereon to encourage a bonding between the adhesion surface and the tooth,

The formations may be located on the adhesion surface at locations corresponding to each tooth to which the strut is to be bonded.

The formations may comprise deformations in the strut and the deformations may be arranged in one or more patterns.

The formations may additionally or alternately comprise variations in a height of the strut.

The formations may additionally or alternately comprise indentations and corresponding protrusions.

The patterns may comprise waffle-weave-patterns and/or honeycomb structures.

The formations may comprise one or more of: scratches, grooves, serrations and knurls.

The formations may comprise one or more of a mesh, a wire, a metal fibre and particles bonded to the strut.

The arc and inclination may be formed by bending.

The arc and inclination may be referred to collectively as "torsion".

The strut may have a lingual surface, wherein the lingual surface is bent in an occlusal-gingiva direction to form said arc and bent in an anterior-posterior direction to form said inclination.

The strut may have a cross-section which is rectangular, oval and/or round. The adhesion surface may be flat.

The strut may comprise a unitary strip. According to such embodiments the strut is not made from more than a single elongate part.

The strut may be unbraided.

A further embodiment of the invention extends to an apparatus for manufacturing a strut for use with an orthodontic appliance, the apparatus comprising a primary roller and a plurality of secondary rollers arranged around a circumference of the primary roller.

The primary roller may comprise a primary forming surface and at least one of the secondary rollers may comprise a secondary forming surface wherein the primary and the secondary forming surfaces are complimentary and are inclined relative to an axis of rotation of the primary roller.

Each of the secondary rollers may comprise a secondary forming surface complimentary to the primary forming surface, and inclined relative to the plane formed by the circumference of the primary roller.

The primary rollers and the secondary rollers may comprise discs. The primary and the secondary rollers may be arranged so that the respective forming surfaces are located on a circumference of the discs and the discs may be brought into engagement with one another so that the forming surfaces engage to shape a strut. The strut may be formed according to the method herein described. The resulting strut may be as herein described.

### DESCRIPTION OF ACCOMPANYING FIGURES

Embodiments of the invention are described with reference to the accompanying schematic diagrams where:
Figures 1 and 2 illustrate a strut according to a first embodiment of the invention;
Figure 3 to 6 illustrate a portion of a strut according to further embodiments of the invention;
Figure 7 illustrates a strut according to a further embodiment of the invention;
Figure 8 illustrates a strut according to an embodiment of the invention and a dispenser for the strut;
Figures 9 to 11 illustrate an apparatus for manufacturing a strut according to an embodiment of the invention.

### DESCRIPTION OF EMBODIMENTS

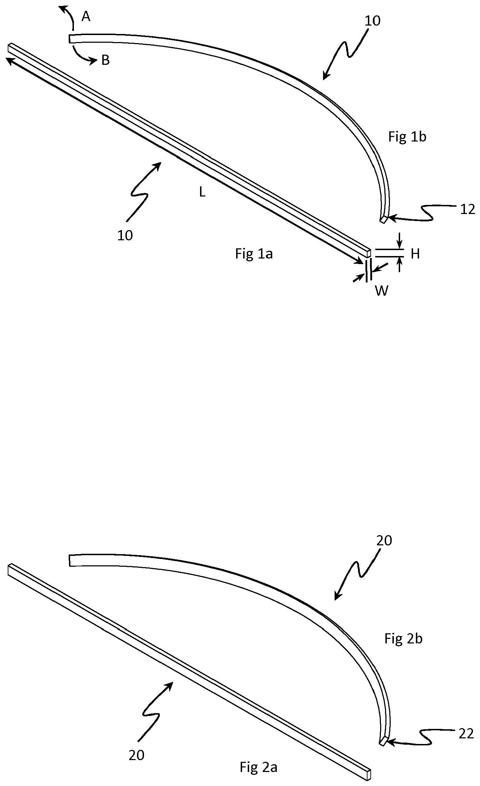

Figures 1 a and 1 b illustrate a strut 10. The strut 10 comprises a unitary band of Ti alloy material formed as a band having a length L, height H and width W, as denoted in Figure 1 a. This is then bent, in the manner described below, to form the strut of Figure 1 b.

The strut 10 is for use with orthodontic appliances. A particularly useful application of the strut 10 is in use as a retainer where the strut 10 is bonded directly to the teeth of a patient. In certain uses, the strut is bonded directly to the lingual surface of the teeth.

It is to be realised that the length L is at least 50 mm in this embodiment and has to be cut to size to fit a patient's mouth. In alternate embodiments, the length L is chosen so that two or more retainers may be made from a single strut. May be dimensioned to suit the size of the patient's mouth, as well as the use to which the strut is being placed. In the embodiment of Figures 1, the height of the strut is 0.5 mm and the width of the strut is 0.3 mm.

Figures 2a and 2b illustrate a strut 20. Strut 20 is similar to strut 10 of Figures 1 a and 1 b, except that the height of strut 20 is 0.7 mm; the width is the same. The strut 20 illustrated in Figure 2a is bent to form the strut 20 illustrated in Figure 2b.

Both strut 10 and strut 20 have a corresponding adhesion surface 12 and 22 which, in use is bonded directly to teeth of a patient. In the embodiments of Figures 1b and 2b, the adhesion surface is the surface on the outer edge of the arc described by the bend in the strut.

To adhere to the lingual surface of the teeth, the strut 10 is bent, as shown in Figures 1b and 2b. In this embodiment, the struts 10 and 20 are bent to form an arc corresponding to a circle 24 shown in Figure 2b. The circle 24 defines an imaginary geometric plane.

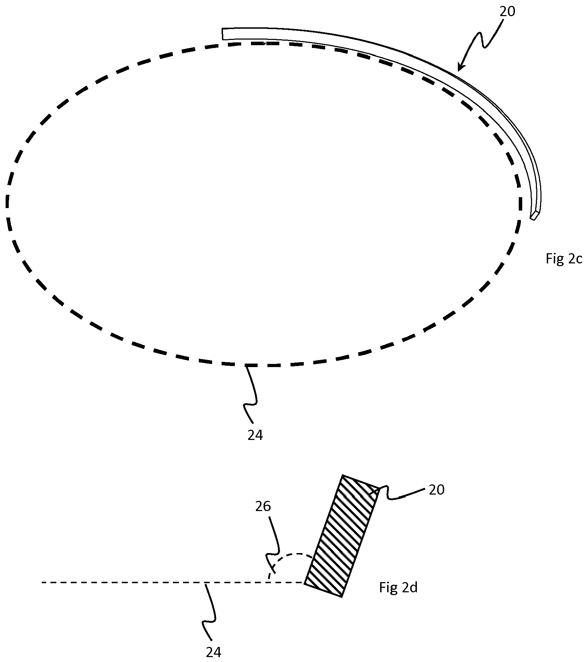

To further accommodate the adhesion between the strut and the teeth of a patient the strut is bent to incline the adhesion surface. With reference to Figure 2c, the adhesion surface 22 of the strut 20 is inclined relative to the plane defined by the circle 24 at an angle of inclination 26. In the embodiments illustrated, the torque comprises bending the upper part of the strut away from the lower part, as illustrated by arrows A and B in Figure 1b, and with reference to the height H of the strut 10. This torque may be applied manually, by an extrusion process, or by rolling, as described in further detail below.

The angle 26 may be chosen to suit the orientation of the teeth of a particular patient. However, for embodiments of the invention intended for mass production, different struts with varying angles of inclination are provided. In embodiments of the invention, the angle 26 may lie between 110° and 160°. In further embodiments, the angle of inclination may be between 120° and 140°.

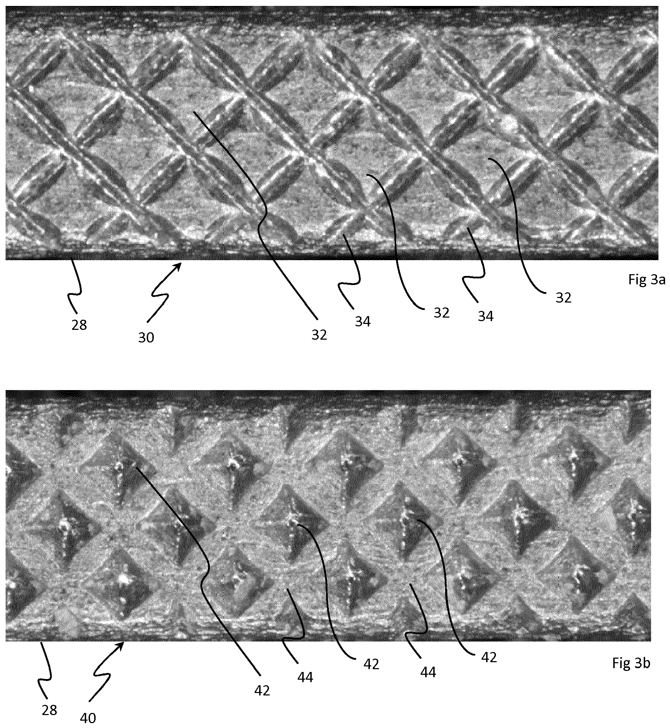

Although not shown in Figures 1 and 2, embodiments of the invention have formations formed on the adhesion surface to improve the bonding between the strut and the teeth. These formations are described further with reference to Figures 3 to 6.

Figure 3a illustrates the adhesion surface 30 of a strut 28 according to an embodiment of an invention. A pattern of raised formations 32 has been formed in the strut 28 by knurling. The raised formations 32 are here in the shape of pyramids having troughs 34 therebetween.

Figure 3b illustrates the opposite surface 40 to the adhesion surface 30 of the strut 28. As illustrated, the knurling results in the pattern of pyramidal formations 32 of the adhesion surface 30 result in pyramidal indentations 42 with flat sections 44 therebetween.

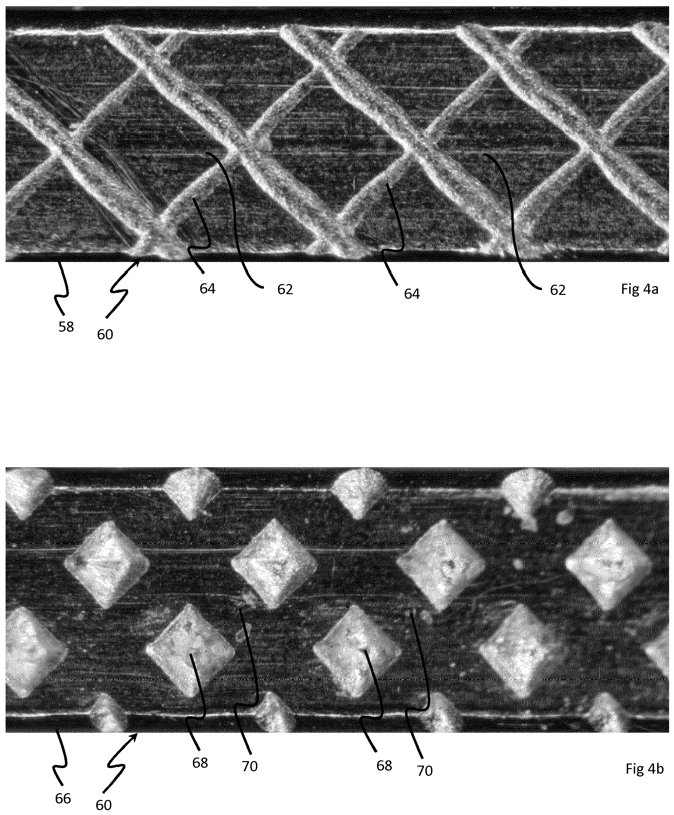

Figure 4a illustrates the adhesion surface 60 of a strut 58 according to an embodiment of an invention. A pattern of indentations 62 has been formed in the strut 58 by knurling. The indentations 62 are here in the shape of indented pyramids. A set of cross-hatching flat portions 64 remains between the indentations 62.

Figure 4b illustrates the opposite surface 66 to the adhesions surface 60 of the strut 58. As illustrated, the knurling results in the pattern of pyramidal formations 68 corresponding to the pyramidal indentations 62 of the adhesion surface 60. Similarly, flat portions 70 of the surface 66 of Figure 4b correspond to the flat portions 64 of the adhesion surface of Figure 4a.

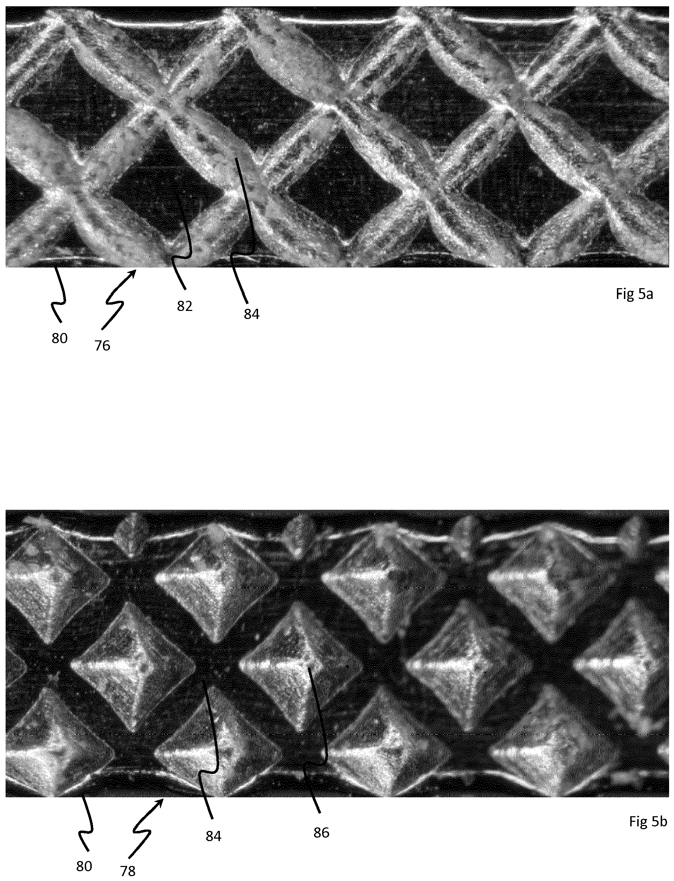

Figure 5a illustrates a strut 80 having an adhesion surface 76 with a plurality of pyramidal indentations 82 formed therein, surrounded by flat sections 84. Figure 5b illustrates the obverse surface 78 of the strut 80 with pyramidal protrusions 86 with flat sections 84 therebetween. The pattern of the indentations 82 of the adhesion surface 76 of the strut 80 is similar to those illustrated in Figures 4 other than the amount of force exerted in the knurling. For the knurling of Figures 5, the degree of force is greater than that used to produce the strut illustrated in Figures 4.

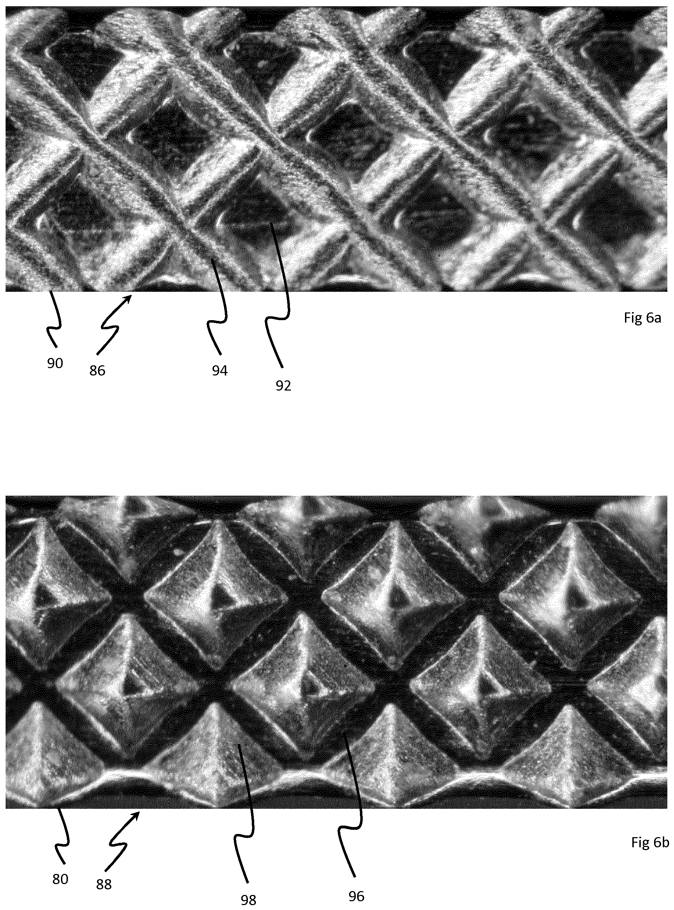

Figure 6a illustrates a strut 90 having an adhesion surface 86 with a plurality of pyramidal indentations 92 formed therein, surrounded by flat sections 94. Figure 5b illustrates the obverse surface 88 of the strut 80 with pyramidal protrusions 86 with flat sections 84 therebetween. The pattern of the indentations 92 of the adhesion surface 86 of the strut 90 is similar to those illustrated in Figures 4 and 5 other than the amount of force exerted in the knurling. For the knurling of Figures 6, the degree of force is greater than that used to produce the patterns illustrated in both Figures 4 and 5.

The adhesion surface of the embodiment of Figure 3a is formed with raised formations whereas the adhesion surface of the embodiment of Figure 3b is formed with indentations. Importantly, for these embodiments of the invention, the formations to the adhesion surface help to increase the surface area in contact with the patient's tooth and this, in turn, increases the surface area over which a bonding material operates, thereby improving the strength if the bond.

Further embodiments of the invention may have a mixture of both indentations and protrusions.

The patterns of indentations or protrusions illustrated in Figures 3 to 6 comprise a cross-hatching, or waffle-weave pattern. In further embodiments, the pattern may be a honey-comb pattern having hexagonal indentations or protrusions. It has been found that a honey-comb pattern is particularly advantageous as it provides structural strength to the strut, in addition to improving the bonding characteristics. Although the pyramidal structures illustrated in Figures 3 to 6 also contribute to the structural integrity of the strut, honey-comb patterns have been found to be particularly advantageous in this regard.

It is to be realised that the manner and arrangement of the formations on the adhesion surface may take many forms. In addition to indenting the surface, further embodiments comprise marking the surface by, for example, scratching, scouring, embossing, etching etc. Such markings or formations may, for example, be knurls or serrations.

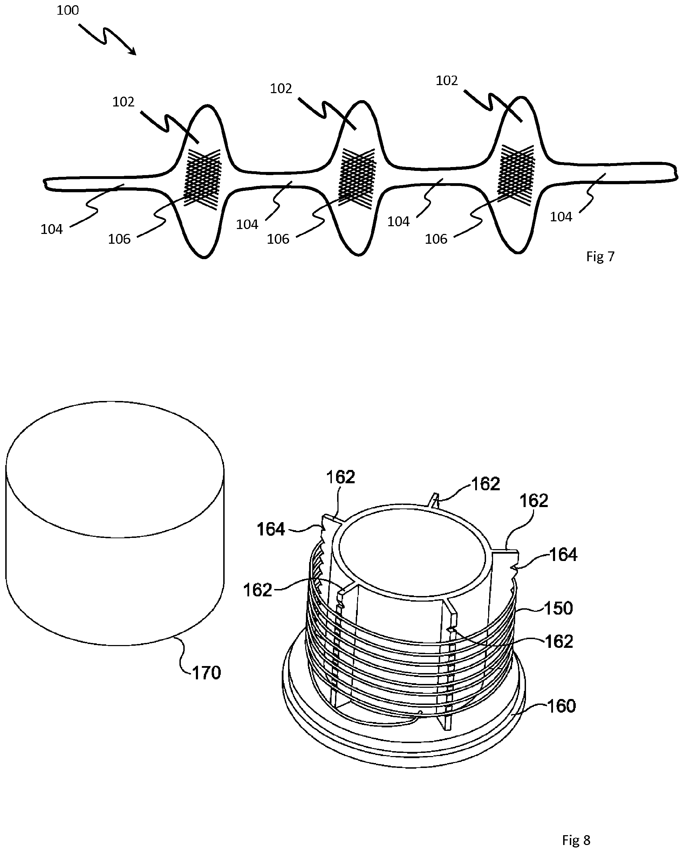

Figure 7 illustrates a strut 100 according to a further embodiment of the invention. The strut 100 comprises a plurality of heightened portions 102 separated by smaller, elongate portions 104. The heightened portions 102 correspond to variations in the height of the strut 100 and their positions correspond to the positions of a patient's teeth when the strut 100 is inserted into their mouth.

The strut 100 is further formed with a plurality of cross-hatched markings 106. The markings are located at the positions of the corresponding heightened portions 102 and are therefore also located at the positions of a patient's teeth when the strut 100 is inserted into their mouth.

Further embodiments of the invention comprise formations bonded to the adhesion surface. For example, a wire mesh may be bonded to the adhesion surface and, in such embodiments, the wire mesh is bonded to the patient's teeth.

The embodiments of the invention illustrated in Figures 1 to 7 have a strut composed of commercially pure ("CP") Titanium. This material does not contain Nickel or Chromium and is therefore less likely to trigger an allergic reaction. Many other materials may be used as well as, or instead of, Titanium. For example, an alloy comprising an element from the group of Ti, Zr, Ta, Mo, Hf, and Cr in the amount greater than 10% by weight or any other stainless steel alloy may be used.

An embodiment of the invention comprises one or more of the following characteristics:
- Material: Commercially pure ("CP") Titanium
- Tensile strength: 350 - 450 Mpa
- Modulus of Elasticity: 10 - 15 GPa
- Wire spring back: < 0.5%
- Max. dimension in the plane perpendicular to the bite plane: 1.2 mm
- Wire cross section: Rectangular with rounded edges on at least 2 lingual corners
- Material: Ti & Ti alloys, Zr, & Zr alloys, and alloys based on Nb, Hf, & Ta.
- tensile strength: 250 - 500 MPa
- modulus of Elasticity: 7 - 17 GPa
- height: between 2.0 mm and 3.0 mm
- width of 0.3 mm or less

Since embodiments of the invention are suited to mass-production, the struts according to certain embodiments are provided in lengths greater than the maximum canine-to-canine length which may be encountered in practice. It is desirable that the length is chose according to a number of factors such as cost, ease of production, ease of transport, ease of handling etc. Therefore, the length of the strut is at least 50 mm. It has been found that lengths of 300 mm, or greater and 400 mm, or greater offer such advantages.

The struts are shaped to form an arc and this arc, in embodiments of the invention, has a diameter which is chosen to approximate the diameter of the dental arch. Similarly, the strut is formed so that the inclination relative to the plane defined by the arc approximates the inclination of the incisors relative to the dental arch.

In embodiments of the invention, the diameter of the arc is 20 mm to 80 mm. In certain embodiments, the diameter may be between 20 mm and 60 mm.

In embodiment of the invention, the angle of inclination is between 110° and 160°. In further embodiments, the angle of inclination may be between 120° and 140°.

Embodiments of the invention are adapted for attachment from canine to canine. When the strut is installed into a patient's mouth, the maximum spacing between the strut and teeth to which the strut is not attached is between 0.2 mm and 1.0 mm. Preferably, the maximum spacing is between 0.2 mm and 0.5 mm. Further preferred is a maximum spacing of about 0.3 mm.

If the length of the strut of embodiments is sufficiently long, the strut will form a helix and it has been found that this is a convenient shape for transport and dispensing. Figure 8 illustrates a strut 150 according to an embodiment of the invention and a dispenser comprising a base 160 and a top 170. The base has five spines 162 and each spine is formed with evenly spaced recesses 164 so that the strut 150 may be wound around the base 160 in the helix shown.

Advantageously, the dispenser keeps the strut sterile while allowing a user to dispense the required length, which is then cut from the helix.

### Method

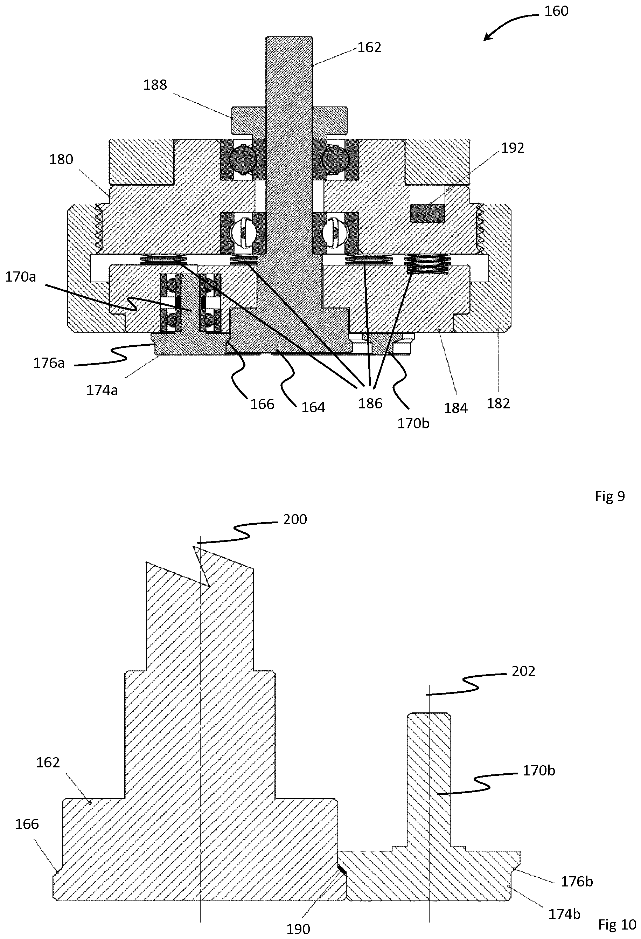

A further embodiment of the invention relates to a method of manufacturing struts as herein described. Figure 9 illustrates an apparatus 160 for manufacturing a strut according to embodiments of the invention. The apparatus 160 comprises a primary roller 162 having a disc 164. The surface 166 of disc 164 forms a primary forming surface.

The apparatus includes six secondary rollers, of which two 170a and 170b are shown in Figure 9. The secondary roller 170a has a disc 174a. The surface 176a of disc 174a forms a secondary forming surface.

Figure 10 illustrates a detail of the apparatus 160. In this Figure, the primary roller 162 and secondary roller 170b are illustrated. The secondary roller 170b has a disc 174b. The surface 176b of disc 174b forms a secondary forming surface. In a similar manner, the other secondary rollers of the apparatus have corresponding discs and secondary forming surfaces.

The primary forming surface of the primary roller and the secondary forming surfaces of the secondary rollers are formed by an inclined surface relative to an axis of rotation of the respective roller (e.g. primary axis of rotation 200 and secondary axis of rotation 202 for secondary roller 170b, shown in Figure 10).

With reference to Figure 10, a strut 190 is formed where the primary forming surface 166 meets the secondary forming surface 176b. The inclines of these surfaces form the incline of the adhesion surface of the strut.

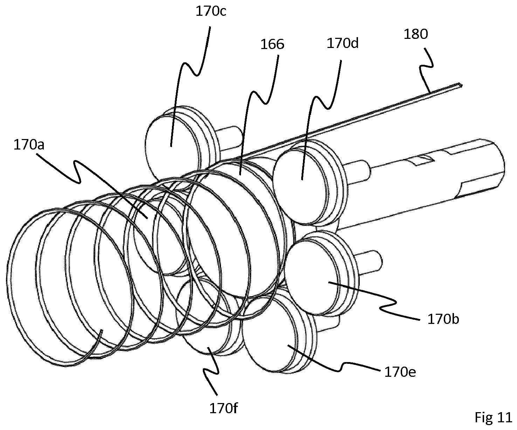

Figure 11 shows a detail of the apparatus 160 showing the primary roller 162 and the six secondary rollers 170a, 170b, 170c, 170d, 170e and 170f arranged around the primary roller 162. The secondary rollers are arranged around the circular primary forming surface and are therefore arranged in a circle, as shown.

When the strut 180 is drawn through the apparatus, the primary and secondary forming surfaces of the primary and secondary rollers form the inclination of the adhesion surface of the strut. Similarly, the arrangement of the secondary rollers about the primary roller impart the arc to the strut, and thereby allow for the arrangement of the strut into a helix.

The apparatus 160 forms a torsion or a bend to the strut to allow a better match between the shape of the strut and the shape of a patent's mouth where the strut is to be inserted. The bend is applied by deforming the strut so that the length describes a curve or arc. It is to be realised that the deformation of the strut is intended to facilitate fitting of the strut onto the lingual tooth surfaces of a patient's upper or lower jaw, when the strut is used in a retainer. Therefore, it is not necessary that the deformation of the strut describe a precise geometric shape, and in certain circumstances, it may provide a better fit if the shape of the strut is irregular.

Furthermore, providing the strut with a torsion has also been found to improve fitting.

In an alternate embodiment, the torsion is applied by clamping either end of the strut and twisting the top of the strut outwards and the bottom of the strut inwards. The respective motion is illustrated by arrows A and B in Figure 1 b.

Referring back to Figure 9, the primary roller 162 is received by a fixed base 180 and is mounted therein. A sliding base 184 receives the six secondary rollers 176 in the arrangement illustrated in Figure 11. A spring assembly 186 produces an axial biasing force between the fixed base 180 and the movable base 184. A series of pass screws (one of which 192 is shown in Figure 9) limits the axial movement of the movable base 184 relative to the fixed base 180. These pass screws also serve to provide accurate linear guidance for the moving base 184.

The springs 186 impart a defined contact pressure between the primary forming surface 166 and the secondary forming surfaces 176.

A union nut 182 engages with a collar of the movable base 184 and is connected by a thread to the fixed base 180. A rotation of the union nut 182 in a clockwise direction causes an axial displacement of the movable base 184 relative to the fixed base 180, thereby causing compression of the springs 186. This also causes the secondary forming surfaces 176 to separate from the primary forming surface 166 providing for the introduction or removal of the strut.

A rotation of the union nut 182 in a counter clockwise direction causes axial displacement of the movable base 184 relative to the fixed base 180 with a defined force.

There are a number of advantages to the use of the apparatus illustrated in Figures 9 to 11. As discussed above, certain embodiments of the strut are composed of titanium. This, and other materials having a lower modulus of elasticity, require such an apparatus to impart the requisite shapes.

Such an apparatus is suitable for creating embossing and other formations on the strut for the adhesion to the teeth.

The apparatus allows for a continuous moulding process which facilitates mass production.

The apparatus ensures there is no or little sliding or rubbing movements on the strut surface, which avoids damaging any structures or formations which may have been previously provided on the strut (the apparatus ensures that the elements which contact the strut move at the same speed as the strut).

Embodiments of the invention comprise forming formations on an adhesion surface of the strut. These may be formed by providing the primary and secondary forming surfaces of the apparatus 160 with appropriate moulding shapes. Other methods for providing such formations are also known. The formations may be provided on the surface prior to the rolling, or thereafter, provided that the type of formation so permits.

For example, if the formations are indentations and projections, then the step of forming the formations may involve knurling, laser cutting, sandblasting, stamping, rolling etc.

In an alternate method, the formations are first formed on a sheet of material and the sheet is then formed into elongate strips by, e.g. rolling, cutting etc.

## Claims

1. A method of manufacturing an endless strut for use with an orthodontic appliance, the method comprising the steps of:
providing an elongate strut comprising an adhesion surface for adhering the strut directly to a tooth;
shaping the strut to form an arc defining a arcuate plane;
and
shaping the strut so that the adhesion surface is inclined relative to the arcuate plane.

2. The method according to claim 1 wherein the strut has two parallel sides.

3. The method according to claim 1 or claim 2 wherein the adhesion surface is inclined relative to the arcuate plane at an angle between 110° and 160°.

4. The method according to any preceding claim wherein a diameter of the arc is between 20 mm and 60 mm.

5. The method according to any preceding claim wherein the strut can be used as an orthodontic retainer.

6. The method according to any preceding claim further comprising the step of forming formations on said adhesion surface.

7. The method according to claim 6 wherein said formations are formed by one or more of: knurling, laser cutting, sandblasting, stamping and rolling.

8. A strut for use with an orthodontic retainer device, the strut comprising an adhesion surface for adhering the strut directly to a tooth, wherein the strut is shaped to form an arc defining an arcuate plane, wherein the strut is shaped so that the adhesion surface is inclined relative to the arcuate plane, and wherein the strut has a length of at least 50 mm.

9. The strut according to claim 8 shaped with said arc and said incline along an entire length of the strut.

10. The strut according to claim 8 or claim 9 wherein the adhesion surface has formations located thereon to encourage a bonding between the adhesion surface and the tooth,

11. The strut according to any of claims 8 to 10 formed as a helix.

12. The strut according to any of claims 8 to 11 having a length of at least 300 mm.

13. Apparatus for manufacturing a strut for use with an orthodontic appliance, the apparatus comprising a primary roller and a plurality of secondary rollers arranged around a circumference of the primary roller.

14. The apparatus according to claim 13 wherein the primary roller comprises a primary forming surface and wherein at least one of the secondary rollers comprises a secondary forming surface wherein the primary and the secondary forming surfaces are complimentary and are inclined relative to an axis of rotation the primary roller.

15. The apparatus according to claim 14 wherein each of the secondary rollers comprises a secondary forming surface complimentary to the primary forming surface, and inclined relative to the plane formed by the circumference of the primary roller.
